# EUROPÄISCHE PATENTANMELDUNG

(11) **EP 1 136 767 A1**
(43) Veröffentlichungstag der Anmeldung: **26.09.2001**
(21) Anmeldenummer: 01100948.7
(22) Anmeldetag: 17.01.2001
(51) Int. Cl.: F25B 15/10, F25B 39/04

(54) **Diffusionsabsorptionsanlage**

(30) Priorität: 22.03.2000 DE 10014122
(71) Anmelder: Buderus Heiztechnik GmbH, D-35576 Wetzlar (DE)
(72) Erfinder: Schulte, Uwe, 35037 Marburg (DE); Korinth, Christoph, 57555 Mudersbach (DE); Vloon, Paulus Jacobus, 7422 RM Deventer (NL); Lammert Wierenga, Hendrik Jacob, 8196 KC Welsum (NL)

(57) **Zusammenfassung**

Die Erfindung betrifft eine Diffusionsabsorptionsanlage und dient zur Optimierung des Betriebes.

Der Kondensator einer Diffusionsabsorptionsanlage und/oder ein mit diesem verbundener Ausgleichsraum (3) ist zu Beginn des Kreislaufs mit Trägergas und einem geringen Ammoniakanteil gefüllt. Die Trägergas-Füllung wird im weiteren Verlauf des Prozesses durch Ammoniakdampf ersetzt. Um das Trägergas zu verdrängen, ist der Kondensator in einen unteren Bereich mit Wärmeübertragungsflächen (2) und einen darüberliegenden Bereich mit einem freien Ausgleichsraum (3) aufgeteilt. Zusätzlich besteht eine Verbindungsleitung (4) zum Verdampfer und/oder Absorber, um einen Kreislauf des Trägergases zu ermöglichen.

## Beschreibung

Die Erfindung betrifft eine Diffusionsabsorptionsanlage nach dem Oberbegriff des Patentanspruches 1.
Diffusionsabsorptionsanlagen sind als Kleinkälteanlagen zur Verwendung in Haushaltskühlschränken seit langem bekannt. Sie können mit einer entsprechenden konstruktiven Gestaltung auch als Wärmepumpen zu Heiz- oder Kühlzwecken eingesetzt werden. In diesen Anlagen wird das Kältemittel Ammoniak (NH₃) und Wasser als Stoffpaar eingesetzt. Dabei stellt das Wasser als Lösungsmittel den absorbierenden Stoff dar, wobei als druckausgleichendes Trägergas in der Regel Wasserstoff oder Helium verwendet wird. Als Arbeitsmedium im Kreisprozeß setzt sich das Ammoniak-Wasser-Gemisch bei Wärmezufuhr durch Temperatur- und Konzentrationsunterschiede in Bewegung.
Die Wärmezufuhr erfolgt in einem Kocher. Durch Sieden werden Gasblasen aus der NH₃-reichen Lösung ausgetrieben. Der Wasseranteil in diesem Gasstrom wird im Rektifikator abgeschieden bzw. zurückgeführt, so dass fast nur NH₃-Dampf zum Kondensator strömt. Dabei muß die Gasblasenpumpe so ausgebildet sein, dass sie die Flüssigkeit auf eine erhebliche Höhe pumpt, um die nötige Antriebskraft zu erzeugen. Der hochreine Ammoniakdampf kondensiert und gibt dabei die Kondensationswärme an das Heizungswasser ab. Anschließend strömt das flüssige Ammoniak nach unten in den Verdampfer. In der Helium-Ammoniak-Atmosphäre verdampft das Ammoniak unter Aufnahme von Umgebungsenergie. Danach gelangt das Gasgemisch durch einen Gas-Gas-Wärmetauscher und strömt zum Absorber, wo das gasförmige Ammoniak von der NH₃-armen AmmoniakWasser-Lösung absorbiert wird und die Absorptionswärme an das Heizungswasser abgibt, bevor der geräuschfreie Prozess wieder neu beginnt.

Sowohl die EP 0 413 791 B1 als auch die EP 0 419 606 B1 zeigen den Gesamtaufbau einer Diffusionsabsorptionsanlage mit einem Kondensator im höchstgelegenen Bereich der Anlage. Dieser ist über Leitungen mit anderen Aggregaten verbunden. Im Kondensator gibt der Ammoniakdampf die Kondensationswärme an das Heizungswasser ab. Es durchströmt Wärmetauscherflächen im Gegenstrom zum Ammoniakdampf. Kondensiertes, flüssiges Ammoniak läuft dabei nach unten ab.
Zu Beginn des Prozesses liegt ein Gleichgewichtszustand vor und es befindet sich sehr wenig Ammoniakdampf im System. Freiräume werden vom Trägergas eingenommen. Sobald die Dampfentwicklung einsetzt, ist es allerdings ungünstig, wenn Inertgas im Bereich der Wärmeübertragungsflächen vorhanden ist und sich gegebenenfalls noch mit dem Ammoniak vermischt.

Der Erfindung liegt die Aufgabe zugrunde, den Betrieb einer Diffusionsabsorptionsanlage, insbesondere durch eine Optimierung des Kondensators, zu verbessern.

Erfindungsgemäß wird dies mit den Merkmalen des Patentanspruches 1 gelöst. Vorteilhafte Weiterbildungen sind den Unteransprüchen zu entnehmen.
Die Diffusionsabsorptionsanlage ist dadurch gekennzeichnet, dass der Kondensator und/oder ein mit diesem verbundener Ausgleichsraum zu Beginn des Kreislaufs mit Trägergas und einem geringen Ammoniakanteil gefüllt ist, und die Trägergas-Füllung im weiteren Verlauf des Prozesses durch Ammoniakdampf ersetzt wird. Wichtig ist dabei, dass das Helium den Ammoniakdampf nicht verunreinigt, weil dann dessen Verdampfung behindert würde. Um das Helium zu verdrängen, ist der Kondensator in einen unteren Bereich mit Wärmeübertragungsflächen und einen darüber liegenden Bereich mit einem freien Ausgleichsraum aufgeteilt.
Über eine im oberen Bereich des Kondensators angeschlossene Verbindungsleitung kann die Trägergas-Füllung in einen als separater Speicherbehälter ausgeführten Ausgleichsraum gelangen. Dabei können auch beide Volumen gemeinsam den notwendigen Ausgleichsraum bilden. Um einen Kreislauf des Trägergases zu ermöglichen, ist die Verbindungsleitung entweder vom Speicherbehälter zum Verdampfer und/oder Absorber weitergeführt oder vom Kondensator aus direkt daran angeschlossen.

Es ist günstig, wenn der Kondensator selbst, oder einschließlich Verbindungsleitung und Ausgleichsraum, mindestens fünf Prozent, vorzugsweise mehr als 15 Prozent, des gesamten Trägergas-Volumens der Anlage aufnimmt. Durch das verdrängte Trägergas-Volumen steigt der Partialdruck des Ammoniakdampfes in der Anlage und damit wiederum die Kondensationsleistung.
Bei dem erfindungsgemäßen Aufbau wird ausgenutzt, dass das Helium als Trägergas leichter als der Ammoniakdampf ist und deshalb nach oben drängt. Daher sollte eine Verbindungsleitung zu einem externen Ausgleichsraum immer an der höchsten Stelle des Kondensator-Behälters abzweigen. Es ist das Ziel, mit einer steigenden Wassertemperatur in der Anlage gleichzeitig auch den Druck im Kondensator zu erhöhen. Damit stellt die Diffusionsabsorptionsanlage automatisch den richtigen Arbeitspunkt ein.

Die Zeichnung stellt ein Ausführungsbeispiel der Erfindung dar. Jeweils einen senkrechten Querschnitt durch den Kondensator einer Diffusionsabsorptionsanlage zeigt:

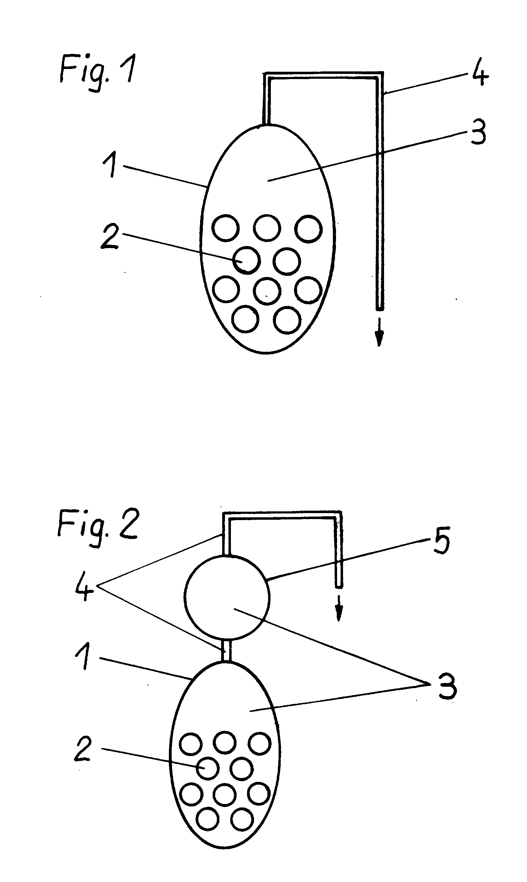

Fig. 1: mit einem integrierten Ausgleichsraum und
Fig. 2: einem separaten Ausgleichsraum.

Der Kondensator besteht aus einem umgebenden, druckbeständigen Behälter 1. Im unteren Bereich sind Wärmeübertragungsflächen 2 angeordnet. Die hier dargestellten Wärmetauscherrohre werden innen von Heizungswasser durchströmt, welches bei laufendem Prozeß die Kondensationswärme des Ammoniakdampfes aufnimmt. Über den Wärmeübertragungsflächen 2 befindet sich ein Ausgleichsraum 3, welcher das Trägergas aufnimmt, sobald es durch die Entstehung von Ammoniakdampf in der Anlage verdrängt bzw. komprimiert wird.
Im oberen Bereich des Kondensators ist eine Verbindungsleitung 4 angeschlossen, welche direkt zum Verdampfer und/oder Absorber führt, um einen Kreislauf des Trägergases zu ermöglichen. Alternativ dazu kann die Trägergas-Füllung in einen als Ausgleichsraum 3 dienenden, separaten Speicherbehälter 5 gelangen. Von dort aus ist die Verbindungsleitung dann ebenfalls zum Verdampfer und/oder Absorber weitergeführt.

## Patentansprüche

1. Diffusionsabsorptionsanlage mit einem Kälte- bzw. Lösungsmittelkreislauf, einem Kocher, einem Absorber, einem Rektifikator, einem Verdampfer, einem Gas-Gas-Wärmetauscher, einem Reservoir für das Kälte- bzw. Lösungsmittel, einem Kondensator für Ammoniakdampf sowie einem druckausgleichenden Trägergas, insbesondere Helium, im Kälte- bzw. Lösungsmittelkreislauf,
**dadurch gekennzeichnet, dass** der Kondensator und/oder ein mit diesem verbundener Ausgleichsraum (3) zu Beginn des Kreislaufs mit Trägergas und einem geringen Ammoniakanteil gefüllt ist, und die Trägergas-Füllung im weiteren Verlauf des Prozesses durch Ammoniakdampf ersetzt wird.

2. Diffusionsabsorptionsanlage nach Anspruch 1,
**dadurch gekennzeichnet, dass** der Kondensator im unteren Bereich mit Wärmeübertragungsflächen (2) und darüber mit einem freien Ausgleichsraum (3) versehen ist.

3. Diffusionsabsorptionsanlage nach Ansprüchen 1 und 2,
**dadurch gekennzeichnet, dass** die Trägergas-Füllung über eine im oberen Bereich des Kondensators angeschlossene Verbindungsleitung (4) in einen als separater Speicherbehälter (5) ausgeführten Ausgleichsraum (3) gelangt.

4. Diffusionsabsorptionsanlage nach den Ansprüchen 1 bis 3,
**dadurch gekennzeichnet, dass** die Verbindungsleitung (4) an den Speicherbehälter (5) angeschlossen und von dort zum Verdampfer und/oder Absorber weitergeführt ist, um einen Kreislauf des Trägergases zu ermöglichen.

5. Diffusionsabsorptionsanlage nach den Ansprüchen 1 bis 4,
**dadurch gekennzeichnet, dass** die Verbindungsleitung (4) direkt an den Verdampfer und/oder Absorber angeschlossen ist.

6. Diffusionsabsorptionsanlage nach den Ansprüchen 1 bis 5,
**dadurch gekennzeichnet, dass** der Kondensator selbst oder in Kombination mit dem Ausgleichsraum (3) mindestens fünf Prozent des gesamten Trägergas-Volumens der Anlage aufnimmt.

7. Diffusionsabsorptionsanlage nach den Ansprüchen 1 bis 6,
**dadurch gekennzeichnet, dass** der Kondensator selbst oder in Kombination mit dem Ausgleichsraum (3) vorzugsweise mehr als 15 Prozent des gesamten Trägergases der Anlage aufnimmt.

8. Diffusionsabsorptionsanlage nach den Ansprüchen 1 bis 7,
**dadurch gekennzeichnet, dass** durch die verdrängte Trägergas-Füllung der Partialdruck des Ammoniakdampfes in der Anlage und somit die Kondensationsleistung steigt.
